# EUROPEAN PATENT SPECIFICATION

(11) **EP 3 465 175 B1**
(45) Date of publication and mention of the grant of the patent: **05.07.2023**
(21) Application number: 17733888.6
(22) Date of filing: 09.05.2017
(51) Int. Cl.: G01N 21/952, B29D 30/00, G01M 17/02, G01N 21/954

(54) **METHOD FOR CHECKING TYRES**
VERFAHREN ZUM PRÜFEN VON REIFEN
PROCÉDÉ DE VÉRIFICATION DE PNEUS

(30) Priority: 31.05.2016 IT UA20163977
(43) Date of publication of application: 10.04.2019
(73) Proprietor: Pirelli Tyre S.p.A., 20126 Milano (IT)
(72) Inventor: BOFFA, Vincenzo, 20126 Milano (IT); HELD, Alessandro, 20126 Milano (IT); PECORARO, Daniele, 20126 Milano (IT); LEITNER, Bernd, 83115 Neubeuern (DE); HEINRICH, Jürgen, 83115 Neubeuern (DE)
(74) Representative: Tirloni, Bartolomeo
(86) International application number: PCT/IB2017/052680
(87) International publication number: WO 2017/208093

(56) References cited:
- WO-A1-2014/049547
- WO-A1-2015/004587
- DE-A1-102013 102 296
- US-A1- 2008 202 229
- US-A1- 2012 134 656
- US-A1- 2014 373 614

## Description

The present invention concerns a method for checking tyres on a tyre production line, particularly by means of the acquisition of images of the internal and external surface of a tyre, and the subsequent processing thereof, for example to detect the possible presence of defects detectable on the surface of a tyre.

"Checking" is understood as carrying out a quality control check on the tyre. The term "tyre" is typically understood as the finished tyre, that is, the tyre after the steps of building, moulding and vulcanizing, but also possibly as the green tyre after the building step and prior to the moulding and/or vulcanizing steps.

A tyre typically has a structure that is substantially toroidal about an axis of rotation of the tyre during operation, and it has an axial centre plane perpendicular to the axis of rotation, said plane typically being a plane of (substantial) geometric symmetry (e.g. excluding possible minor asymmetries, such as the tread pattern and/or the inner structure).

A tyre generally comprises a carcass ply having end flaps that are opposite each other and engaged to respective annular anchoring structures incorporated in the circular end portions of the tyre that are radially internal and substantially perpendicular to the axis of rotation and identified by the term "beads". One or more belt layers having fabric or metal reinforcement cords can be associated with the carcass ply in a radially external position. A tread band is applied in a position radially external to the belt layers. In an axially external position, respective lateral inserts made of an elastomeric material are also applied on the lateral surfaces of the carcass ply, each lateral surface extending from one of the edges of circular ends of the tread band to as far as the respective annular anchoring structure to the beads.

The term "crown" is understood as the sole, typically quasi-cylindrical portion of a tyre that comprises the tread band, the belt layers and at least the corresponding portions of carcass ply/plies and liner (in tyres without an air chamber, or "tubeless" tyres) that are radially internal thereto.

A "sidewall" is understood as one of the two portions of the tyre that face each other and that extend substantially in a radial manner from opposite sides of the crown to the beads. Each sidewall thus comprises at least one corresponding portion of the carcass ply/plies and said lateral insert.

A "shoulder" is understood as each connecting portion of the tyre between the crown and the respective sidewall (in other words, the two shoulders are found at the two circular 'corners' of the tyre that are radially and axially external). The extension of each shoulder is circular and substantially perpendicular to the rotation axis.

The external or internal surface of the tyre is understood as the surface that remains visible after coupling the tyre with its mounting rim and the surface that is no longer visible following said coupling, respectively.

The "inner space of a tyre" is understood as the set of points through which a straight line passing through the point considered and parallel to the axis of the tyre intersects the tyre in two sections arranged at opposite sides with respect to the point considered.

The terms "low", "high", below", "above" and suchlike are used to identify the relative position of an element, including for example a component of a tyre, a tyre, an apparatus, a device, etc., with respect to the ground, or of one of said elements with respect to another element.

The expression "substantially perpendicular" referring to geometric elements (including straight lines, planes, surfaces, etc.) is used to indicate that these elements form an angle ranging between about 75° and about 105°, preferably in the range of about 80° to about 100°.

The expression "substantially parallel" referring to the above-mentioned geometric elements is used to indicate that these elements form an angle ranging between about -15° and about +15°, preferably in the range of about -10° to about +10°.

With reference to a checking station, "longitudinal dimension" is understood as the dimension parallel to the direction of movement of the tyres to be checked and "transverse dimension" is understood as the dimension perpendicular to the direction of movement. "Length" is understood as the longitudinal extension and "width" is understood as the transverse extension. Incident "directional light radiation or light" on a point of a surface is understood as light radiation for which a solid angle exists, the solid angle having the point as the vertex and a measure less than or equal to n/8 steradians within which at least 75% of the overall light power lies, preferably at least 90%, and more preferably the entire light power.

"Diffused light radiation or light" is understood as non-directional light radiation.

Incident "grazing light radiation or light" on a point of a surface is understood as light radiation in which at least 75% of the overall light power thereof incident on the point of the surface forms, with a plane tangent to the surface in said each point, an angle of incidence less than or equal to 60°.

A "digital image" or equivalently an "image" is generally understood as a set of data, typically contained in a computer file, in which each n-tuple of coordinates (typically each pair of coordinates) of a finite set (typically two-dimensional and in a matrix, that is, with N rows x M columns) of n-tuples of spatial coordinates (each n-tuple corresponding to a "pixel") is associated with a corresponding set of numerical values (which can represent magnitudes of various types). For example, in monochromatic images (such as images with levels of grey or "greyscale" images), this set of values consists in a single value on a finite scale (typically with 256 levels or shades), this value representing for example the level of brightness (or intensity) of the respective n-tuple of spatial coordinates, when displayed. A further example is represented by colour images, in which the set of values represents the level of brightness of a multitude of colours, or channels, typically the primary colours (e.g. red, green and blue in the RGB coding, and cyan, magenta, yellow and black in the CMYK coding). The term "image" does not necessarily imply actual displaying of it.

All references to a specific "digital image" (e.g. the digital image initially acquired on the tyre) more generally encompass any digital image that can be obtained by means of one or more digital processes for processing said specific digital image (including for example filtering, equalization, smoothing, binarization, thresholding, morphological transformations (opening, etc.), derivative or integral computations, etc.).

The term "two-dimensional image" or "2D image" indicates a digital image in which information representing the reflectivity/diffusivity and/or colour of the surface is associated with each pixel thereof, including images taken by common cameras or digital cameras (e.g. a CCD).

The term "three-dimensional image" or "3D image" indicates a digital image in which surface altitude information is associated with each pixel thereof.

As concerns the processes for manufacturing and building tyres for vehicle wheels, there is a need to perform quality control checks on the products realized, with the aim of preventing defective tyres or tyres which in any case do not comply with the technical specifications from being put on the market, and/or with the aim of progressively regulating the apparatuses and machinery employed so as to improve and optimize execution of the operations carried out in the production process.

For example, these quality control checks include checks made by human operators who dedicate a pre-established amount of time for a visual and tactile inspection; in light of his/her own experience and perception skills, should the operator suspect that the tyre does not comply with certain quality standards, the tyre undergoes further checks, by means of a check performed by a human in greater detail and/or by suitable equipment, for the purpose of carrying out a more in-depth assessment of possible structural and/or quality-related inadequacies.

Patent WO 2015/122295 A1 discloses a device for the acquisition of three-dimensional images of the inner surface of a tyre, comprising a light source, a mirror and a camera, and configured so that the mirror rotates about an axis of rotation after having been inserted in the cavity of the tyre.

US 2008/202229 A1 discloses a device for testing a tire by means of an interferometric measuring method.

WO 2015/004587 A1 discloses a method and related apparatus for controlling tyres.

US 2014/0373614 A1 discloses an apparatus for the optical inspection of a tire.

DE 10 2013 102296 A1 discloses a method for checking tyres.

As concerns the tyre quality control checks, the Applicant has posed the issue of checking the internal and external tyre surface by means of optical acquisition of digital images of a tyre and the subsequent processing thereof, for example for the purpose of detecting possible defects on or in proximity to the surface. The defects to be considered can include for example irregularity of or on the surface of a tyre (compound not vulcanized, alterations in shape, etc.), structural non-uniformity, cuts, the presence of foreign matter on the surface, etc.

The Applicant has observed that in order for the checking process to be used "in-line" within a plant for the production of tyres, the checking process should be carried out in a less time and with limited costs and dimensions. The Applicant has realized that in the methods for quality control checks on tyres with optical acquisition of images of the internal and external surface of a tyre, it is advantageous that at least two different apparatuses coexist in one station, each apparatus bearing at least one image acquisition system, and that they operate at least partially at the same time, for the purpose of reducing acquisition time, the occupied floor space and the occupied volume. The Applicant has also realized that the coexistence of two different apparatuses operating at the same time on the same tyre creates a risk of collision between the apparatuses or limits in their movement, which can slow down or complicate the image acquisition process, particularly as regards the acquisition of ample circumferential portions of the tyre surface.

The Applicant has thus posed the issue of acquiring a set of images of circumferential portions of a tyre surface, both the internal and external surface, in a limited amount of time and with a limited number of checking stations and/or acquisition apparatuses, at the same time preventing collisions between the apparatuses operating on the same tyre at the same time or one apparatus from blocking the other, and also limiting the disadvantages deriving from the footprint area of the checking stations.

After extensive processing using 3D simulation software, tests on prototypes and subsequent adjustments, the Applicant has noted that the geometry of the checking station, the positioning of the acquisition apparatuses therein, and a specific operational sequence of the latter have a key role in resolving the issue described hereinabove.

More specifically, the Applicant has found that in a checking station, owing to a specific positioning of the movement members of the acquisition apparatuses with respect to the direction of movement of the tyres, with a specific geometry of the plan of the station and a specific operating mode of the acquisition systems, it is possible to realize a checking process for tyres in which extensive circumferential portions of the internal and external surface are acquired rapidly, advantageously exploiting the available space. According to one aspect, the invention concerns a method for checking tyres within a tyre production line as set forth in claim 1.

The Applicant holds that the sequence of image acquisitions - in which in each acquisition two images of circumferential portions of surface are acquired substantially in a simultaneous manner by the two apparatuses respectively, so that the two apparatuses do not acquire images of the internal surface at the same time and so that in at least one acquisition the two apparatuses acquire images of the internal and external surface respectively, combined with the fact that the above-mentioned aspect ratio of the footprint area is less than 0.85 and that the two bases of the movable arms are arranged on opposite sides of the line that bisects the width - makes it possible to acquire images of ample circumferential portions of internal and external surface in a short amount of time, with a very limited risk of collision between the two apparatuses or between the two movable arms, while the overall dimensions of the station along the direction of movement are kept within reduced limits.

In fact, the above-mentioned arrangement of the bases of the movable arms makes it possible to space them, taking full advantage of the dimension of the plan of the station that is greater in extension, that is, in the dimension perpendicular to the direction of movement. Therefore, the two arms can move in the space rapidly without colliding or blocking each other.

Moreover, given that the "length" of the footprint area is shorter than the "width", the station will have a limited footprint area along the direction of movement. Given that more than one station is typically arranged consecutively along the direction of movement and that they have the same footprint area dimensions, the lengths of the stations are added together. The fact that the length of each station is limited reduces the effect of accumulation of the lengths, limiting the overall length of the plurality of stations even more so. In fact, according to the Applicant, a long overall dimension in length, with respect to the dimension in width, which does not undergo the accumulation effect described above, proves to be much more disadvantageous.

Lastly, the Applicant has verified that it is advantageous to avoid simultaneous acquisition of images of circumferential portions of internal surface, in that this situation would create a risk of collision between the apparatuses or the movable arms, or bring about a situation involving serious obstruction, thus slowing down the operations for positioning the apparatuses or for the actual acquisition process.

The present invention can offer one or more of the following preferred characteristics.

Preferably, it is envisioned that said tyre be introduced in a third checking station along said direction of movement, the third station comprising a fifth apparatus for acquiring images of the tyre surface and a sixth apparatus for acquiring images of the tyre surface, each one of said fifth apparatus and said sixth apparatus being mounted on a respective movement member. Preferably, each movement member comprises a respective fixed base and a respective movable arm on a free end of which the respective apparatus of said fifth apparatus and said sixth apparatus is mounted.

Preferably, the third station comprises a respective fixed supporting structure that defines a respective footprint area of the third station, wherein said respective bases of the movement members are fixed to an upper portion of said respective supporting structure.

Preferably, said respective footprint area of the third station has a respective maximum length and a respective maximum width, wherein a respective aspect ratio of said respective footprint area is less than 0.85, and more preferably it is less than or equal to 0.80.

Preferably, said respective bases are arranged in such a manner that their vertical projections lie at opposite sides of a line parallel to the direction of movement and bisecting said respective maximum width.

Preferably, it is envisioned that at least two respective acquisitions be carried out while the tyre remains in said second station, for the purpose of checking said at least one part of the internal surface and said at least one part of the external surface, wherein in each acquisition, each one of said third apparatus and said fourth apparatus acquires at least one respective image of a respective circumferential portion of tyre surface.

Preferably, in each acquisition, said third apparatus and said fourth apparatus acquire the respective images substantially in a simultaneous manner. Preferably, in neither one of said two acquisitions do said third apparatus and said fourth apparatus both acquire a respective image of a circumferential portion of the internal surface.

Preferably, in at least one of said two acquisitions, said third apparatus acquires a respective image of a respective circumferential portion of external surface and said fourth apparatus acquires a respective image of a respective circumferential portion of internal surface.

Preferably, it is envisioned that at least two respective acquisitions be carried out while the tyre remains in said third station, for the purpose of checking said at least one part of the internal surface and said at least one part of the external surface, wherein in each acquisition, each one of said fifth apparatus and said sixth apparatus acquires at least one respective image of a respective circumferential portion of tyre surface.

Preferably, in each acquisition, said fifth apparatus and said sixth apparatus acquire the respective images substantially in a simultaneous manner.

Preferably, in neither one of said two acquisitions do said fifth apparatus and said sixth apparatus both acquire a respective image of a circumferential portion of the internal surface.

Preferably, in at least one of said two acquisitions, said fifth apparatus acquires a respective image of a respective circumferential portion of external surface and said sixth apparatus acquires a respective image of a respective circumferential portion of internal surface.

The ordinal numbers such as first, second, etc., identifying elements and/or operations do not necessarily reflect the spatial and/or temporal sequence with which the respective elements and/or operations are arranged, utilized and/or performed in the present invention. For example, the third station can be interposed between the first station and the second station and, in terms of time, the respective acquisitions can be carried out between the acquisitions of the first station and the second station. As a further example, the present invention provides for any number and/or combination of the above-mentioned numbered elements and/or operations, for example the combination of only the first and the third stations.

Moreover, in some embodiments of the present invention, the expression "first station" encompasses a checking station having the technical characteristics (including the acquisition apparatuses) and/or the operations (including the image acquisitions) disclosed herein with reference to the second station and/or the third station. Therefore, for example the expression "first apparatus" can encompass an apparatus having the technical characteristics and/or operations disclosed herein with reference to the third and/or the fifth apparatus.

According to the Applicant, the combination of at least two stations (preferably all three stations), selected from among the first station, the second station and the third station, in each of which the above-mentioned acquisitions are carried out, makes it possible to obtain a congruent set of images, in terms of type and acquired extension of the surface, in a limited overall period of time, with a limited cycle time, defined as the inverse of the number of tyres checked per unit of time, and with a limited requirement as regards occupied space, especially in length.

Preferably all three stations, including the first station, the second station and the third station, are adjacently arranged along the direction of movement, and more preferably in such a manner that the exit of a station coincides with the entrance of a subsequent adjacent station. In this manner, the overall length is limited, the overall time for passage is reduced and/or the need for support and/or movement members between one station and the next is limited.

Preferably, said aspect ratio of one or more stations, that is, of the first station, the second station and the third station, is greater than or equal to 0.5, and more preferably greater than or equal to 0.6. In this manner, the footprint area is optimized, limiting the occupation of space in the direction perpendicular to the direction of movement.

The direction of movement is preferably horizontal.

A distance between two respective bases along a respective transverse dimension is preferably greater than or equal to 1.25 m, more preferably greater than or equal to 1.4 m. Said distance is measured using the respective axes of said movement members closest to the respective bases as the reference point. Advantageously, in this manner, spatial interference between the movement members is reduced, in that, when in use, the two movable arms have sufficient space available to move rapidly without colliding and/or blocking each other.

The footprint area of each station can be of any shape. The footprint area is preferably shaped in the form of a rectangle.

The footprint area preferably has shorter sides parallel to said direction of movement. In this manner, the supporting structure proves to be particularly rational and robust, and the spaces available are substantially exploited.

Preferably, at least one checking station (more preferably all of the checking stations) comprises a conveyor belt that supports said tyre while said tyre remains in said at least one checking station and that is apt for moving said tyre at least along a feed direction.

Preferably, during said acquisition of said at least one respective image by each one of said apparatuses, the respective conveyor belt pivots about an axis coincident with an axis of rotation of the tyre, more preferably a vertical axis. In this manner, the conveyor belt has the function of a rotatable support, as well as the function of contributing to movement of the tyre entering and exiting the checking station.

Preferably, said respective conveyor belts has a rectangular plan, wherein a diagonal of said plan of the respective conveyor belt is shorter than said maximum length of the footprint area of the respective checking station and longer than or equal to 0.9 times said maximum length of the footprint area of the respective checking station.

Preferably, an aspect ratio of the plan of the respective conveyor belt, defined as a ratio of a short side to a long side of said plan, is greater than or equal to 0.7.

Preferably, said feed direction is parallel to a long side of the conveyor belt. Preferably, the conveyor belt is apt for moving said tyre also along a direction that is perpendicular to the feed direction. In this manner, it performs the function of centring the tyre.

Preferably, during said process of introducing the tyre in the respective checking station, said respective conveyor belt conveys the tyre along said feed direction parallel to said direction of movement. In this manner, owing to the above-mentioned plan geometry of the conveyor belt, the possibility of rotation of the conveyor belt is ensured and at the same time, the conveyor belt can move the tyre entering and exiting the station, supporting it up to a point in proximity to its entering and exiting the station. In turn, in this manner, the need for additional support members for the tyre at the entrance to and exit from the station is eliminated or reduced to a minimum. Preferably, at least one checking station (more preferably all three stations) comprises a respective pair of rollers arranged at the entrance and exit of the at least one checking station, respectively, said rollers having axes arranged transversely.

Preferably, said rollers are motorized. The rollers can thus support, and possibly contribute to moving, the tyre entering and exiting the station.

Preferably, for each pair of adjacent stations, between said first station, said second station and said third station, the roller at the exit of one of the stations of the pair of stations coincides with the roller at the entrance of the other station of the stations constituting the pair of stations. In this manner, the number of movement and support members is further reduced, as is the time needed for the tyre to pass through the checking station.

Preferably, for at least one of said first, second and third stations, at least three acquisitions in a time sequence are comprised while the tyre remains in the respective station, wherein in each acquisition, each one of said respective apparatuses of the respective station acquires at least one respective image of a respective circumferential portion of tyre surface and wherein said respective apparatuses of the respective station acquire the respective images substantially in a simultaneous manner.

Preferably, in none of said three acquisitions do said respective apparatuses both acquire a respective image of the circumferential portion of internal surface. Preferably, in each one of said three acquisitions, one of said respective apparatuses of the respective station acquires a respective image of a respective circumferential portion of external surface and the other of said respective apparatuses of the respective station acquires a respective image of a respective circumferential portion of internal surface. In this manner, while the tyre remains in a single station, at least six images of circumferential portions can be acquired in rapid succession, preferably three images of the internal surface and three images of the external surface.

Preferably, for at least one of said first, second and third stations, four acquisitions in a time sequence are comprised while the tyre remains in the respective station, wherein in each acquisition, each one of said respective apparatuses of the respective station acquires at least one respective image of a respective circumferential portion of tyre surface and wherein said respective apparatuses of the respective station acquire the respective images substantially in a simultaneous manner.

Preferably, in none of said four acquisitions do said respective apparatuses of the respective station both acquire a respective image of a circumferential portion of internal surface.

Preferably, in each one of said four acquisitions in the second station, said third apparatus acquires a respective image of a respective circumferential portion of external surface and said fourth apparatus acquires a respective image of a respective circumferential portion of internal surface.

In this manner, while the tyre remains in a single station, at least eight images of circumferential portions can be acquired in rapid succession, preferably, in the second station, four images of the internal surface and four images of the external surface.

Preferably, in each one of said respective acquisitions, said first apparatus and/or said third apparatus acquire(s) at least one two-dimensional image of said respective circumferential portion of surface. More preferably, said first apparatus and/or said third apparatus also acquire(s), at the same time as said two-dimensional image, at least one three-dimensional image of said respective circumferential portion of surface. In this manner, the first and/or the third apparatus acquire(s) two different types of images of the same portion of surface at the same time. For example, 3D technology (particularly high definition 3D technology, for example with a resolution of less than or equal to 10 microns) is used to detect dents or protrusions of material on the surface of tyres, typically depressions or bubbles, whereas 2D technology is employed to detect defective states that are not visible in 3D, such as cuts and stains.

Preferably, in said first station, said first apparatus acquires (more preferably in said four acquisitions) two-dimensional and three-dimensional images of circumferential portions of external surface of a first portion of a sidewall, of external surface of a shoulder, of internal surface of a first portion, and of a second portion of a crown of said tyre, respectively.

Preferably, (more preferably in one of said four acquisitions preceding in time the other acquisitions of said four acquisitions), said second apparatus acquires a three-dimensional image of a circumferential portion of internal surface of a crown of said tyre, more preferably at low resolution (e.g. with a resolution greater than 10 microns). In this manner, information is acquired on the inner shape of the tyre, which is useful for deciding whether to proceed by subsequently introducing additional apparatuses into the inner space of the tyre.

Preferably (more preferably in said other acquisitions of said four acquisitions), said second apparatus acquires two-dimensional images, using grazing lighting, of a circumferential portion of external surface of a bead, a first portion and a second portion of the tread of said tyre, respectively. Advantageously, in this manner, images useful for detecting cuts on the external bead and carcass plies emerging on the tread are acquired.

Preferably, in said second station, said third apparatus acquires (in said respective acquisitions) two-dimensional and three-dimensional images of circumferential portions of external surface of a bead, a second portion of a sidewall, a first portion and a second portion of a crown of said tyre, respectively.

Preferably, in said second station, said fourth apparatus acquires (in said respective acquisitions) three-dimensional images of circumferential portions of internal surface of a bead, a first portion and a second portion of a sidewall and a shoulder of said tyre, respectively.

Preferably, each one of the above-mentioned three-dimensional images is obtained by triangulation on a two-dimensional matrix image of the surface illuminated by a laser line.

Preferably, in said third station, said fifth apparatus acquires (in said respective acquisitions) two-dimensional images of circumferential portions of external surface of a bead, a sidewall and a shoulder of said tyre, respectively.

Preferably, in said third station, said sixth apparatus acquires (in said respective acquisitions) two-dimensional images of circumferential portions of internal surface of a shoulder, a bead, a first portion and a second portion of a sidewall of said tyre, respectively.

According to the Applicant, the above-mentioned acquisitions provide a set of 2D and 3D images sufficient to detect the defects present in the tyres by means of subsequent digital processing.

Preferably, each one of said second station and/or third station has one or more of the technical characteristics described for the first station. Preferably, it is envisioned that one or more of the operations described for the first station be carried out in each one of said second station and/or third station.

Preferably, said circumferential portions are part of an upper axial half of said tyre. In this manner, the apparatuses, also by insertion from above into the inner space of the tyre, can acquire the entire internal and external surface of the upper half of the tyre, which, after being overturned onto the opposite side, shall then undergo the same sequence of acquisitions for the opposite half.

Further characteristics and advantages will become more apparent from the detailed description of several exemplary, but not exclusive, embodiments of a method for checking tyres in accordance with the present invention. This description is provided herein below with reference to the attached drawings, which are provided solely as approximate and thus non-limiting examples, and of which:
- Figure 1 is a partial, schematic perspective view of a plant for checking tyres in accordance with the method of the present invention.
- Figure 2 is a partial, schematic side view of the plant of Figure 1.
- Figure 3 is a partial, schematic top view of the plant of Figure 1.

A plant for checking tyres according to the method of the present invention is indicated by the number 100.

By way of example, the plant 100 comprises three checking stations: a first station 1, a second station 2 and a third station 3.

The first station 1 comprises an entrance 10 and an exit 11 for the tyre (unillustrated) being checked to enter and exit. A direction of movement X is defined for the tyre entering and exiting the first station 1.

The first station 1 comprises a first apparatus 4 and a second apparatus 5 for acquiring images of a surface of the tyre. The acquisition apparatuses are only shown schematically.

The first station 1 comprises, for each acquisition apparatus, a respective movement member 6. Preferably, each movement member 6 is an anthropomorphic robot arm having at least six axes, exemplarily seven axes. Each movement member 6 comprises a respective fixed base 7 and a respective movable arm 8 on a free end of which a respective apparatus 4, 5 is mounted.

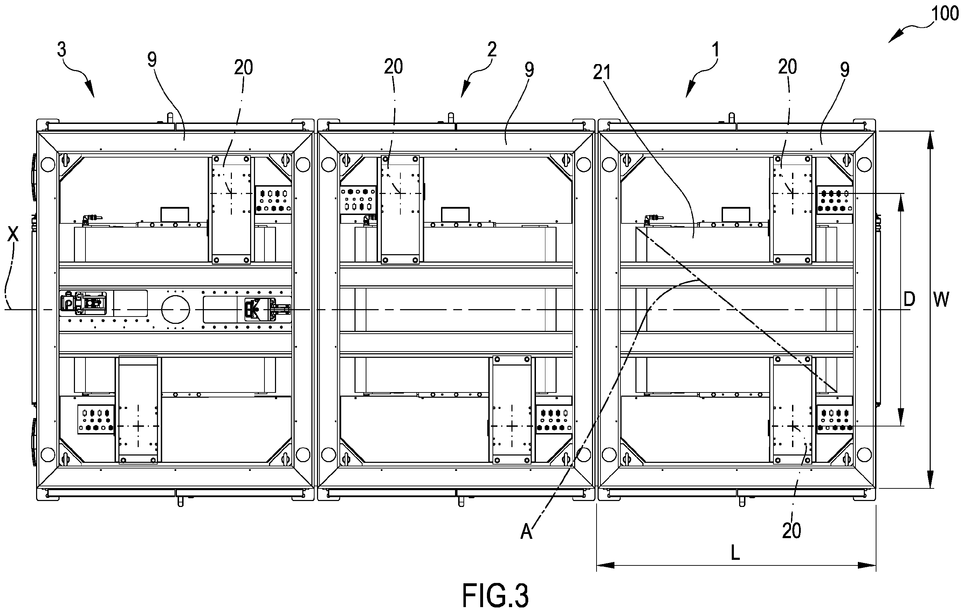

The first station 1 comprises a fixed supporting structure 9 that defines a footprint area (illustrated in Figure 3) of the first station.

The bases 7 are fixed to an upper portion 30 of the supporting structure 9.

The footprint area has a maximum length L along the direction of movement and a maximum width W along the transverse dimension, wherein the aspect ratio of the footprint area, defined as the ratio of the maximum length to the maximum width is, by way of example, equal to 0.75.

The fixed bases 7 are arranged in such a manner that their vertical projections lie at opposite sides of a line (in Figure 3 coincident with the direction of movement X) parallel to the direction of movement X and bisecting the maximum width W.

By way of example, a distance D between said two fixed bases 7 along the transverse dimension is equal to 1.25m. The distance D is measured (Fig. 3) using the axis 20 of each movement member closest to the respective fixed base as the reference point, this axis 20 being, by way of example, an axis of rotation.

Preferably, the footprint area is shaped in the form of a rectangle, with shorter sides parallel to the direction of movement.

The first checking station 1 preferably comprises a respective conveyor belt 21 that supports the tyre while the tyre remains in the station. Preferably, the conveyor belt 21 is apt for moving the tyre along a feed direction (in the figures, coincident with the direction of movement X) parallel to one side thereof and along the direction perpendicular to the above-mentioned feed direction and it is apt for pivoting about a vertical axis Y.

The conveyor belt 21 preferably has a rectangular plan (Fig. 3), wherein the diagonal A of the plan of the conveyor belt is slightly shorter than the length L of the footprint area of the station; for example it is equal to about 0.92 times the length L of the footprint area of the station. By way of example, the ratio of a short side to a long side of the plan of the conveyor belt 21 is equal to about 0.8. In this manner, a sufficient base for supporting the tyre is ensured.

The first station 1 preferably comprises a pair of motorized rollers 22, 23 arranged at the entrance 35 and exit 36 ports, respectively, and having axes arranged horizontally and transversely.

Preferably, the first station 1, the second station 2 and the third station 3 are arranged adjacently or "close together" in a series along the direction of movement X, in such a manner that the exit 11 of the first station coincides with the entrance of the second station, and the exit of the second station coincides with the entrance of the third station.

Preferably, and as can be seen in the Figure, a single roller 23 is interposed between the first station and the second station at the exit 11 of the first station 1 and the entrance of the second station 2. In a similar manner, a single roller is interposed between the second station and the third station. The second station 2 comprises a third apparatus 12 for acquiring images of the tyre surface and a fourth apparatus 13 for acquiring images of the tyre surface, each one of said third apparatus 12 and said fourth apparatus 13 being mounted on a respective movement member 6.

The third station 3 preferably comprises a fifth apparatus 14 for acquiring images of the tyre surface and a sixth apparatus 15 for acquiring images of the tyre surface, each one of said fifth apparatus 14 and said sixth apparatus 15 being mounted on a respective movement member 6.

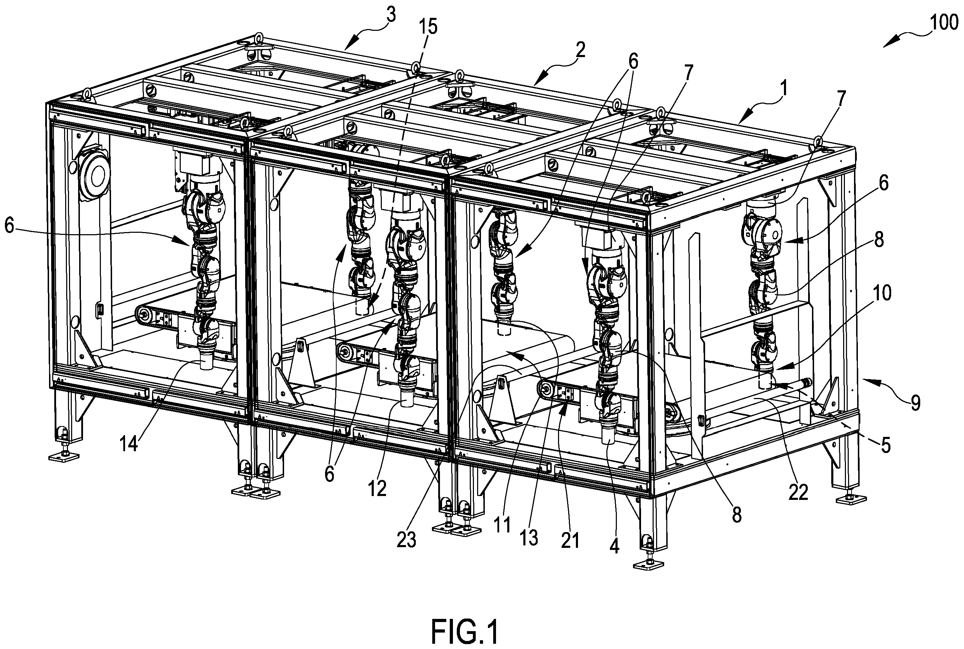

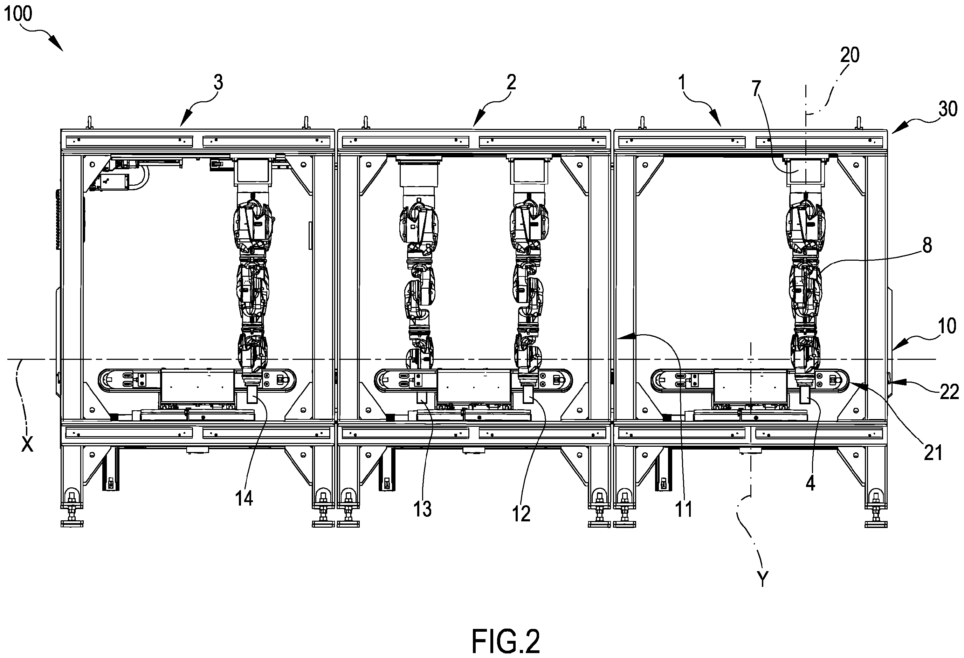

By way of example, as regards the supporting structure, the footprint area, the movement members, the respective conveyor belt and the rollers, the second station 2 and the third station 3 have the same characteristics described above for the first station 1, as shown in Figures 1, 2 and 3.

When in use, it is possible to implement the method for checking tyres within a tyre production line in accordance with the present invention.

It is envisioned that a tyre (unillustrated) be introduced in the first checking station 1 along the direction of movement X, through the entrance 10. For this purpose, both the roller 22 and the conveyor belt 21 are activated so as to support and move the tyre resting on its sidewall.

Preferably, during introduction of the tyre in the station, the respective conveyor belt 21 does not pivot about the axis Y and it is arranged with the feed direction parallel to the direction of movement X so as to convey the tyre along this direction.

When the tyre is positioned in such a manner that the axis of rotation thereof coincides with the axis of rotation Y of the conveyor belt, the conveying function of the latter is stopped and the rotation of the conveyor belt about the axis Y is activated instead.

The robot arms are activated so as to position the respective acquisition apparatuses in proximity to the respective portion of the tyre surface.

With the conveyor belt kept in rotation about the vertical axis Y and with the robot arms kept fixed, one proceeds with a first acquisition, in which the first apparatus 4 and the second apparatus 5 acquire at least one respective image of a respective circumferential portion of tyre surface substantially in a simultaneous manner.

By way of example, in the first acquisition, the first apparatus 4 acquires a two-dimensional image and, at the same time, a three-dimensional image of the same circumferential portion of external surface corresponding to a first half-portion of the upper sidewall of the tyre.

By way of example, in the first acquisition, the second apparatus 5 acquires a low resolution three-dimensional image of a circumferential portion of internal surface corresponding to the entire upper half-portion of the crown of the tyre.

Upon completion of the first acquisition, the robot arms are repositioned so that the respective apparatuses can acquire different portions of the surface.

Following this, with the conveyor belt kept in rotation about the vertical axis Y and with the robot arms kept fixed, one proceeds with a second acquisition. By way of example, in the second acquisition, the first apparatus 4 acquires a two-dimensional image and, at the same time, a three-dimensional image of the same circumferential portion of external surface of the upper shoulder of the tyre and the second apparatus 5 acquires, at the same time as the first apparatus, a two-dimensional image, using grazing light, of a circumferential portion of external surface corresponding to the entire upper bead.

Upon completion of the second acquisition, in a manner similar to that described hereinabove one proceeds with execution of the third acquisition, in which the first apparatus 4 acquires a two-dimensional image and, at the same time, a three-dimensional image of the same circumferential portion of internal surface corresponding to a first upper portion of the crown and the second apparatus 5 acquires, at the same time as the first apparatus, a two-dimensional image, using grazing light, of a circumferential portion of external surface corresponding to a first upper portion of the crown.

Upon completion of the third acquisition, in a manner similar to that described hereinabove one proceeds with execution of the fourth and last acquisition, in which the first apparatus 4 acquires a two-dimensional image and, at the same time, a three-dimensional image of the same circumferential portion of internal surface corresponding to a second upper portion of the crown and the second apparatus 5 acquires, at the same time as the first apparatus, a two-dimensional image, using grazing light, of a circumferential portion of external surface corresponding to a second upper portion of the crown.

Upon completion of the fourth acquisition, rotation of the conveyor belt 21 about the axis Y is stopped, and the conveyor belt 21 and the roller 23 are subsequently activated in a mode for moving the tyre so as to remove the latter from the first station 1 and introduce it in the second station 2 through the exit 11 of the first station 1, which is shared with the entrance of the second station 2, along the direction of movement X.

As described for the first station 1, four additional acquisitions of images, the fifth to the eighth acquisition, are carried out in the second station 2.

By way of example, in the fifth acquisition, the third apparatus 12 acquires a two-dimensional image and, at the same time, a three-dimensional image of the same circumferential portion of external surface corresponding to the upper bead of the tyre and the fourth apparatus 13 acquires, at the same time as the third apparatus, a three-dimensional image of a circumferential portion of internal surface corresponding to the upper bead.

By way of example, in the sixth acquisition, the third apparatus 12 acquires a two-dimensional image and, at the same time, a three-dimensional image of the same circumferential portion of external surface corresponding to a second half-portion of the upper sidewall and the fourth apparatus 13 acquires, at the same time as the third apparatus, a three-dimensional image of a circumferential portion of internal surface corresponding to a first half-portion of the upper sidewall.

By way of example, in the seventh acquisition, the third apparatus 12 acquires a two-dimensional image and, at the same time, a three-dimensional image of the same circumferential portion of external surface corresponding to a first portion of the upper half-crown and the fourth apparatus 13 acquires, at the same time as the third apparatus, a three-dimensional image of a circumferential portion of internal surface corresponding to a second half-portion of the upper sidewall.

By way of example, in the eighth acquisition, the third apparatus 12 acquires a two-dimensional image and, at the same time, a three-dimensional image of the same circumferential portion of external surface corresponding to a second portion of the upper half-crown and the fourth apparatus 13 acquires, at the same time as the third apparatus, a three-dimensional image of a circumferential portion of internal surface corresponding to the upper shoulder.

Upon completion of the eighth acquisition, rotation of the respective conveyor belt about the axis Y is stopped, and the respective conveyor belt and the respective roller interposed between the second station and the third station are activated in a movement mode so as to remove the tyre from the second station 2 and introduce it in the third station 3 through the exit of the second station 2, which is shared with the entrance of the third station 3, along the direction of movement X.

As described for the first station 1, four additional acquisitions of images, the ninth to the twelfth acquisition, are carried out in the third station 3.

By way of example, in the ninth acquisition, the fifth apparatus 14 acquires a two-dimensional image of a circumferential portion of external surface corresponding to the upper sidewall of the tyre and the sixth apparatus 15 acquires, at the same time as the fifth apparatus, a two-dimensional image of a circumferential portion of internal surface corresponding to the upper shoulder. Preferably, during the ninth acquisition, the upper shoulder is pressed from the top downwards in proximity to the surface acquisition area, for the purpose of improving detection of some types of defects (such as cuts or shearing of the carcass).

By way of example, in the tenth acquisition, the fifth apparatus 14 acquires a two-dimensional image of a circumferential portion of external surface corresponding to the upper bead of the tyre and the sixth apparatus 15 acquires, at the same time as the fifth apparatus, a two-dimensional image of a circumferential portion of internal surface corresponding to the upper bead. By way of example, in the eleventh acquisition, only the sixth apparatus 15 is in operation and it acquires a two-dimensional image of a circumferential portion of internal surface corresponding to a first portion of the upper sidewall, preferably keeping the upper sidewall pressed from the top downwards in proximity to the acquisition surface area during the acquisition. By way of example, in the twelfth acquisition, the fifth apparatus 14 acquires a two-dimensional image of a circumferential portion of external surface corresponding to the upper shoulder of the tyre and the sixth apparatus 15 acquires, at the same time as the fifth apparatus, a two-dimensional image of a circumferential portion of internal surface corresponding to a second portion of the upper sidewall. Preferably, during the twelfth acquisition, the upper sidewall is pressed from the top downwards in proximity to the acquisition surface area.

Subsequently, the tyre is moved so as to remove it from the third station through the respective exit, turned over about the median plane of substantial axial symmetry and subjected to an additional sequence of twelve acquisitions as described above, so as to acquire the entire internal and external surface of the other half of the tyre.

This additional sequence of twelve acquisitions can be carried out in the same three stations 1, 2 and 3 described above or, preferably, in three additional stations that are entirely identical to the three stations described above and arranged downstream of the latter.

## Claims

1. A method for checking tyres within a tyre production line, wherein, for each tyre, at least one part of the external surface and at least one part of the internal surface are checked, the method comprising:
- introducing said tyre in at least a first checking station (1) along a direction of movement (X), wherein said at least a first station (1) comprises a first apparatus (4) for acquiring images of the tyre surface and a second apparatus (5) for acquiring images of the tyre surface, each one of said first apparatus (4) and second apparatus (5) being mounted on a respective movement member (6), wherein each movement member (6) comprises a respective fixed base (7) and a respective movable arm (8), on a free end of which the respective apparatus of said first apparatus (4) and said second apparatus (5) is mounted, wherein said at least a first station comprises a fixed supporting structure (9) that defines its footprint area, said bases (7) of the movement members (6) being fixed to an upper portion (30) of said supporting structure (9), wherein said footprint area has a maximum length (L) along said direction of movement (X) and a maximum width (W) along a dimension perpendicular to said direction of movement, wherein an aspect ratio of said footprint area, defined as the ratio of said maximum length (L) to said maximum width (W), is less than 0.85, and wherein said bases (7) are arranged in such a manner that their vertical projections lie at opposite sides of a line parallel to the direction of movement (X) and bisecting said maximum width (W);
- carrying out at least two acquisitions while the tyre remains in said at least a first station (1), for the purpose of checking said at least one part of the internal surface and said at least one part of the external surface,
wherein in each acquisition, each one of said first apparatus (4) and said second (5) apparatus acquires at least one respective image of a respective circumferential portion of tyre surface,
wherein in each acquisition, said first apparatus (4) and said second apparatus (5) acquire the respective images substantially in a simultaneous manner,
wherein in one of said two acquisitions, said first apparatus (4) acquires a respective image of a respective circumferential portion of external surface and said second apparatus (5) acquires a respective image of a respective circumferential portion of internal surface, and
wherein in the other one of said two acquisitions:
one of said first apparatus (4) and second apparatus (5) acquires a respective image of a respective circumferential portion of external surface and the other of said first apparatus (4) and second apparatus (5) acquires a respective image of a respective circumferential portion of internal surface, or
both of said first (4) and second apparatus (5) acquire a respective image of a circumferential portion of the external surface,
the method further comprising:
introducing said tyre in a second checking station (2) along said direction of movement (X), the second checking station (2) comprising a third apparatus (12) for acquiring images of the tyre surface and a fourth apparatus (13) for acquiring images of the tyre surface, each one of said third apparatus (12) and said fourth apparatus (13) being mounted on a respective movement member (6), wherein each movement member (6) comprises a respective fixed base (7) and a respective movable arm (8) on a free end of which the respective apparatus of said third apparatus (12) and said fourth apparatus (13) is mounted,
wherein the second station (2) comprises a respective fixed supporting structure (9) that defines a respective footprint area of the second station (2), wherein said respective bases (7) of the movement members (6) are fixed to an upper portion of said respective supporting structure (9),
wherein said respective footprint area has a respective maximum length and a respective maximum width, wherein a respective aspect ratio of said respective footprint area is less than 0.85, and
wherein the first station (1) and the second station (2) are adjacently arranged along the direction of movement (X), in such a manner that an exit (11) of the first station (1) coincides with an entrance of the second station (2).

2. The method according to claim 1, wherein said aspect ratio is greater than or equal to 0.5 and wherein the footprint area is shaped in the form of a rectangle, with shorter sides parallel to said direction of movement (X).

3. The method according to any one of the preceding claims, wherein a distance (D) between said bases (7) along a transverse dimension is greater than or equal to 1.25 m.

4. The method according to any one of the preceding claims, wherein said at least a first checking station (1) comprises a conveyor belt (21) that supports said tyre while the tyre remains in said at least a first station and it is apt for moving said tyre along a feed direction, wherein during said introduction of the tyre in said at least a first station (1), said conveyor belt (21) conveys said tyre along said feed direction parallel to said direction of movement (X).

5. The method according to claim 4, wherein during said acquisition of said at least one respective image by each one of said first apparatus (4) and said second (5) apparatus, the conveyor belt (21) pivots about an axis (Y) coincident with an axis of rotation of the tyre.

6. The method according to claim 4 or 5, wherein said conveyor belt (21) has a rectangular plan, wherein a diagonal (A) of said plan of the conveyor belt is shorter than said maximum length (L) of the footprint area of said at least a first station and longer than or equal to 0.9 times said maximum length (L), wherein an aspect ratio of the plan of the conveyor belt (21), defined as a ratio of a short side to a long side of said plan, is greater than or equal to 0.7 and wherein said feed direction is parallel to a long side.

7. The method according to any one of the preceding claims, wherein said at least a first station (1) comprises a pair of rollers (22, 23) arranged at an entrance (10) and the exit (11), respectively, said rollers having axes arranged transversely.

8. The method according to any one of the preceding claims, comprising carrying out at least three acquisitions in a time sequence while the tyre remains in said at least a first station (1), wherein in each acquisition, each one of said first apparatus (4) and said second apparatus (5) acquires at least one respective image of a respective circumferential portion of tyre surface, wherein said first apparatus (4) and said second apparatus (5) acquire the respective images substantially in a simultaneous manner, wherein in none of said three acquisitions do said first apparatus (4) and said second apparatus (5) both acquire a respective image of the circumferential portion of internal surface, and wherein in each one of said three acquisitions either said first apparatus (4) or said second apparatus (5) acquires a respective image of a respective circumferential portion of external surface and the other of either said first apparatus (4) or said second apparatus (5) acquires a respective image of a respective circumferential portion of internal surface.

9. The method according to claim 8, comprising carrying out at least four acquisitions in a time sequence while the tyre remains in said at least a first station (1), wherein in each acquisition each one of said first apparatus (4) and said second apparatus (5) acquires at least one respective image of a respective circumferential portion of tyre surface, wherein said first apparatus (4) and said second apparatus (5) acquire the respective images substantially in a simultaneous manner, and wherein in none of said four acquisitions do said first apparatus (4) and said second apparatus (5) both acquire a respective image of a circumferential portion of internal surface.

10. The method according to any one of the preceding claims, wherein in each one of said respective acquisitions, said first apparatus (4) acquires at least one two-dimensional image of said respective circumferential portion of surface and also, at the same time as said two-dimensional image, at least one three-dimensional image of said respective circumferential portion of surface.

11. The method according to any one of the preceding claims, wherein the first station (1), the second station (2) and a third station (3) are adjacently arranged along the direction of movement (X), in such a manner that an exit of the second station (2) coincides with an entrance of the third station (3).

12. The method according to claim 11, wherein each one of said second station (2) and/or third station (3) has the technical characteristics claimed for the first station (1), and wherein in each one of said second station (2) and/or third station (3), performance of the operations claimed for the first station (1) is comprised.

13. The method according to any one of the preceding claims, wherein in said first station (1), said first apparatus (4) acquires two-dimensional and three-dimensional images of circumferential portions of external surface of a first portion of a sidewall, of external surface of a shoulder, of internal surface of a first portion, and of a second portion of a crown of said tyre, respectively, and wherein said second apparatus (5) acquires a three-dimensional image of a circumferential portion of internal surface of a crown of said tyre, and two-dimensional images, using grazing lighting, of a circumferential portion of external surface of a bead, a first portion and a second portion of the tread of said tyre, respectively.

14. The method according to any one of the preceding claims, wherein in said second station (2), said third apparatus (12) acquires two-dimensional and three-dimensional images of circumferential portions of external surface of a bead, a second portion of a sidewall, a first portion and a second portion of a crown of said tyre, respectively, and said fourth apparatus (13) acquires three-dimensional images of circumferential portions of internal surface of a bead, a first portion and a second portion of a sidewall and a shoulder of said tyre, respectively.

15. The method according to any one of claims 11 to 12, wherein in said third station (3), a fifth apparatus (14) for acquiring images of the tyre surface acquires two-dimensional images of circumferential portions of external surface of a bead, a sidewall and a shoulder of said tyre, respectively, and a sixth apparatus (15) for acquiring images of the tyre surface acquires two-dimensional images of circumferential portions of internal surface of a shoulder, a bead, a first portion and a second portion of a sidewall of said tyre, respectively.

## Patentansprüche

1. Verfahren zum Prüfen von Reifen innerhalb einer Reifenproduktionslinie, wobei für jeden Reifen mindestens ein Teil der Außenfläche und mindestens ein Teil der Innenfläche geprüft werden, wobei das Verfahren Folgendes umfasst:
- Einführen des Reifens in mindestens eine erste Prüfstation (1) entlang einer Bewegungsrichtung (X), wobei die mindestens eine erste Station (1) eine erste Vorrichtung (4) zum Erfassen von Bildern der Reifenoberfläche und eine zweite Vorrichtung (5) zum Erfassen von Bildern der Reifenoberfläche umfasst, wobei sowohl die erste Vorrichtung (4) als auch die zweite Vorrichtung (5) an einem jeweiligen Bewegungselement (6) angebracht ist, wobei jedes Bewegungselement (6) eine jeweilige feste Basis (7) und einen jeweiligen beweglichen Arm (8) umfasst, an dessen freiem Ende die jeweilige Vorrichtung der ersten Vorrichtung (4) und der zweiten Vorrichtung (5) angebracht ist, wobei die mindestens eine erste Station eine feste Stützstruktur (9) aufweist, die ihren Aufstandsflächenbereich definiert, wobei die Basen (7) der Bewegungselemente (6) an einem oberen Abschnitt (30) der Stützstruktur (9) befestigt sind, wobei der Aufstandsflächenbereich eine maximale Länge (L) entlang der Bewegungsrichtung (X) und eine maximale Breite (W) entlang einer Abmessung senkrecht zu der Bewegungsrichtung aufweist, wobei ein Seitenverhältnis des Aufstandsflächenbereichs, das als das Verhältnis der maximalen Länge (L) zu der maximalen Breite (W) definiert ist, kleiner als 0.85 ist, und wobei die Basen (7) so ausgelegt sind, dass ihre vertikalen Vorsprünge auf gegenüberliegenden Seiten einer Linie liegen, die parallel zur Bewegungsrichtung (X) verläuft und die maximale Breite (W) halbiert;
- Durchführen von mindestens zwei Erfassungen, während der Reifen in der mindestens einen ersten Station (1) verbleibt, um den mindestens einen Teil der Innenfläche und den mindestens einen Teil der Außenfläche zu überprüfen,
wobei bei jeder Erfassung jede der ersten Vorrichtung (4) und der zweiten Vorrichtung (5) mindestens ein jeweiliges Bild eines jeweiligen Umfangsabschnitts der Reifenoberfläche erfasst,
wobei bei jeder Erfassung die erste Vorrichtung (4) und die zweite Vorrichtung (5) die jeweiligen Bilder im Wesentlichen gleichzeitig erfassen,
wobei bei einer der beiden Erfassungen die erste Vorrichtung (4) ein jeweiliges Bild eines jeweiligen Umfangsabschnitts der Außenfläche erfasst und die zweite Vorrichtung (5) ein jeweiliges Bild eines jeweiligen Umfangsabschnitts der Innenfläche erfasst, und
wobei bei der anderen der beiden Erfassungen:
eine der ersten Vorrichtung (4) und der zweiten Vorrichtung (5) ein jeweiliges Bild eines jeweiligen Umfangsabschnitts der Außenfläche erfasst und die andere der ersten Vorrichtung (4) und der zweiten Vorrichtung (5) ein jeweiliges Bild eines jeweiligen Umfangsabschnitts der Innenfläche erfasst, oder
sowohl die erste (4) als auch die zweite Vorrichtung (5) ein jeweiliges Bild eines Umfangsabschnitts der Außenfläche erfassen,
wobei das Verfahren ferner Folgendes umfasst:
Einführen des Reifens in eine zweite Prüfstation (2) entlang der Bewegungsrichtung (X), wobei die zweite Prüfstation (2) eine dritte Vorrichtung (12) zum Erfassen von Bildern der Reifenoberfläche und eine vierte Vorrichtung (13) zum Erfassen von Bildern der Reifenoberfläche umfasst, wobei jede der dritten Vorrichtung (12) und der vierten Vorrichtung (13) an einem jeweiligen Bewegungselement (6) angebracht ist, wobei jedes Bewegungselement (6) eine jeweilige feste Basis (7) und einen jeweiligen beweglichen Arm (8) umfasst, an dessen freiem Ende die jeweilige Vorrichtung der dritten Vorrichtung (12) und der vierten Vorrichtung (13) angebracht ist,
wobei die zweite Station (2) eine jeweilige feste Stützstruktur (9) umfasst, die einen jeweiligen Aufstandsflächenbereich der zweiten Station (2) definiert, wobei die jeweiligen Basen (7) der Bewegungselemente (6) an einem oberen Abschnitt der jeweiligen Stützstruktur (9) befestigt sind,
wobei der jeweilige Aufstandsflächenbereich eine jeweilige maximale Länge und eine jeweilige maximale Breite aufweist, wobei ein jeweiliges Seitenverhältnis des jeweiligen Aufstandsflächenbereichs weniger als 0,85 beträgt, und
wobei die erste Station (1) und die zweite Station (2) entlang der Bewegungsrichtung (X) nebeneinander ausgelegt sind, so dass ein Ausgang (11) der ersten Station (1) mit einem Eingang der zweiten Station (2) zusammenfällt.

2. Verfahren nach Anspruch 1, wobei das Seitenverhältnis größer oder gleich 0,5 ist und wobei die Aufstandsfläche in Form eines Rechtecks geformt ist, dessen kürzere Seiten parallel zur Bewegungsrichtung (X) verlaufen.

3. Verfahren nach einem der vorhergehenden Ansprüche, wobei ein Abstand (D) zwischen den Basen (7) entlang einer Querabmessung größer als oder gleich 1,25 m ist.

4. Verfahren nach einem der vorhergehenden Ansprüche, wobei die mindestens eine erste Prüfstation (1) ein Förderband (21) umfasst, das den Reifen trägt, während der Reifen in der mindestens einen ersten Station verbleibt, und das geeignet ist, den Reifen entlang einer Vorschubrichtung zu bewegen, wobei während der Einführung des Reifens in die mindestens eine erste Station (1) das Förderband (21) den Reifen entlang der Vorschubrichtung parallel zur Bewegungsrichtung (X) befördert.

5. Verfahren nach Anspruch 4, wobei während der Erfassung des mindestens einen jeweiligen Bildes durch die erste Vorrichtung (4) und die zweite Vorrichtung (5) das Förderband (21) um eine Achse (Y) schwenkt, die mit einer Drehachse des Reifens zusammenfällt.

6. Verfahren nach Anspruch 4 oder 5, wobei das Förderband (21) einen rechteckigen Grundriss aufweist, wobei eine Diagonale (A) des Grundrisses des Förderbandes kürzer als die maximale Länge (L) der Aufstandsfläche der mindestens einen ersten Station und länger als oder gleich dem 0,9-fachen der maximalen Länge (L) ist, wobei ein Seitenverhältnis des Grundrisses des Förderbandes (21), das als Verhältnis einer kurzen Seite zu einer langen Seite des Grundrisses definiert ist, größer als oder gleich 0,7 ist und wobei die Vorschubrichtung parallel zu einer langen Seite ist.

7. Verfahren nach einem der vorhergehenden Ansprüche, wobei die mindestens eine erste Station (1) ein Paar von Rollen (22, 23) umfasst, die an einem Eingang (10) bzw. am Ausgang (11) ausgelegt sind, wobei die Rollen quer angeordnete Achsen aufweisen.

8. Verfahren nach einem der vorhergehenden Ansprüche, umfassend die Durchführung von mindestens drei Erfassungen in einer zeitlichen Abfolge, während der Reifen in der mindestens ersten Station (1) verbleibt, wobei bei jeder Erfassung jede der ersten Vorrichtung (4) und der zweiten Vorrichtung (5) mindestens ein jeweiliges Bild eines jeweiligen Umfangsabschnitts der Reifenoberfläche erfasst, wobei die erste Vorrichtung (4) und die zweite Vorrichtung (5) die jeweiligen Bilder im Wesentlichen gleichzeitig erfassen, wobei bei keiner der drei Erfassungen die erste Vorrichtung (4) und die zweite Vorrichtung (5) beide ein jeweiliges Bild des Umfangsabschnitts der Innenfläche erfassen, und wobei bei jeder der drei Erfassungen entweder die erste Vorrichtung (4) oder die zweite Vorrichtung (5) ein jeweiliges Bild eines jeweiligen Umfangsabschnitts der Außenfläche erfasst und die andere von entweder der ersten Vorrichtung (4) oder der zweiten Vorrichtung (5) ein jeweiliges Bild eines jeweiligen Umfangsabschnitts der Innenfläche erfasst.

9. Verfahren nach Anspruch 8, umfassend das Ausführen von mindestens vier Erfassungen in einer zeitlichen Abfolge, während der Reifen in der mindestens einen ersten Station (1) verbleibt, wobei bei jeder Erfassung jede der ersten Vorrichtung (4) und der zweiten Vorrichtung (5) mindestens ein jeweiliges Bild eines jeweiligen Umfangsabschnitts der Reifenoberfläche erfasst, wobei die erste Vorrichtung (4) und die zweite Vorrichtung (5) die jeweiligen Bilder im Wesentlichen gleichzeitig erfassen, und wobei bei keiner der vier Erfassungen die erste Vorrichtung (4) und die zweite Vorrichtung (5) beide ein jeweiliges Bild eines Umfangsabschnitts der Innenfläche erfassen.

10. Verfahren nach einem der vorhergehenden Ansprüche, wobei die erste Vorrichtung (4) bei jeder der jeweiligen Erfassungen mindestens ein zweidimensionales Bild des jeweiligen Umfangsabschnitts der Oberfläche und außerdem gleichzeitig mit dem zweidimensionalen Bild mindestens ein dreidimensionales Bild des jeweiligen Umfangsabschnitts der Oberfläche aufnimmt.

11. Verfahren nach einem der vorhergehenden Ansprüche, wobei die erste Station (1), die zweite Station (2) und eine dritte Station (3) entlang der Bewegungsrichtung (X) nebeneinander ausgelegt sind, so dass ein Ausgang der zweiten Station (2) mit einem Eingang der dritten Station (3) zusammenfällt.

12. Verfahren nach Anspruch 11, wobei jede der zweiten Station (2) und/oder dritten Station (3) die für die erste Station (1) beanspruchten technischen Merkmale aufweist und wobei in jeder der zweiten Station (2) und/oder dritten Station (3) die Durchführung der für die erste Station (1) beanspruchten Vorgänge erfolgt.

13. Verfahren nach einem der vorhergehenden Ansprüche, wobei in der ersten Station (1) die erste Vorrichtung (4) zweidimensionale und dreidimensionale Bilder von Umfangsabschnitten der Außenfläche eines ersten Abschnitts einer Seitenwand, der Außenfläche einer Schulter, der Innenfläche eines ersten Abschnitts und eines zweiten Abschnitts einer Krone des Reifens aufnimmt, wobei die zweite Vorrichtung (5) ein dreidimensionales Bild eines Umfangsabschnitts der Innenfläche eines Scheitels des Reifens und zweidimensionale Bilder unter Verwendung von Streiflicht eines Umfangsabschnitts der Außenfläche eines Wulstes, eines ersten Abschnitts und eines zweiten Abschnitts der Lauffläche des Reifens aufnimmt.

14. Verfahren nach einem der vorhergehenden Ansprüche, wobei in der zweiten Station (2) die dritte Vorrichtung (12) zweidimensionale und dreidimensionale Bilder von Umfangsabschnitten der Außenfläche eines Wulstes, eines zweiten Abschnitts einer Seitenwand, eines ersten Abschnitts und eines zweiten Abschnitts einer Krone des Reifens aufnimmt, und die vierte Vorrichtung (13) dreidimensionale Bilder von Umfangsabschnitten der Innenfläche eines Wulstes, eines ersten Abschnitts und eines zweiten Abschnitts einer Seitenwand und einer Schulter des Reifens aufnimmt.

15. Verfahren nach einem der Ansprüche 11 bis 12, wobei in der dritten Station (3) eine fünfte Vorrichtung (14) zur Erfassung von Bildern der Reifenoberfläche zweidimensionale Bilder von Umfangsabschnitten der Außenfläche eines Wulstes, einer Seitenwand bzw. einer Schulter des Reifens erfasst und eine sechste Vorrichtung (15) zur Erfassung von Bildern der Reifenoberfläche zweidimensionale Bilder von Umfangsabschnitten der Innenfläche einer Schulter, eines Wulstes, eines ersten Abschnitts bzw. eines zweiten Abschnitts einer Seitenwand des Reifens erfasst.

## Revendications

1. Procédé de contrôle de pneus au sein d'une ligne de production de pneus, dans lequel, pour chaque pneu, au moins une partie de la surface externe et au moins une partie de la surface interne sont contrôlées, le procédé comprenant :
- l'introduction dudit pneu dans au moins un premier poste de contrôle (1) le long d'une direction de déplacement (X), dans lequel ledit au moins un premier poste (1) comprend un premier appareil (4) pour acquérir des images de la surface du pneu et un deuxième appareil (5) pour acquérir des images de la surface du pneu, chacun desdits premier appareil (4) et deuxième appareil (5) étant monté sur un élément de mouvement respectif (6), dans lequel chaque élément de mouvement (6) comprend une base fixe respective (7) et un bras mobile respectif (8), sur une extrémité libre de laquelle l'appareil respectif dudit premier appareil (4) et dudit deuxième appareil (5) est monté, dans lequel ledit au moins un premier poste comprend une structure de support fixe (9) qui définit sa zone d'empreinte, lesdites bases (7) des éléments de mouvement (6) étant fixées à une partie supérieure (30) de ladite structure de support (9), dans lequel ladite zone d'empreinte a une longueur maximale (L) le long de ladite direction de déplacement (X) et une largeur maximale (W) le long d'une dimension perpendiculaire à ladite direction de mouvement, dans lequel un rapport d'aspect de ladite zone d'empreinte, défini comme étant le rapport de ladite longueur maximale (L) par rapport à ladite largeur maximale (W), est inférieur à 0,85, et dans lequel lesdites bases (7) sont agencées de telle sorte à ce que leurs projections verticales se trouvent sur les côtés opposés d'une ligne parallèle à la direction de déplacement (X) et bissectant ladite largeur maximale (W) ;
- la réalisation d'au moins deux acquisitions pendant que le pneu reste dans ledit au moins un premier poste (1), en vue de contrôler ladite au moins une partie de la surface interne et ladite au moins une partie de la surface externe,
dans lequel dans chaque acquisition, chacun dudit premier appareil (4) et dudit deuxième (5) appareil acquiert au moins une image respective d'une partie circonférentielle respective de la surface du pneu,
dans lequel, dans chaque acquisition, ledit premier appareil (4) et ledit deuxième appareil (5) acquièrent les images respectives sensiblement de manière simultanée,
dans lequel, dans l'une desdites deux acquisitions, ledit premier appareil (4) acquiert une image respective d'une partie circonférentielle respective de surface externe et ledit deuxième appareil (5) acquiert une image respective d'une partie circonférentielle respective de surface interne, et
dans lequel dans l'autre desdites deux acquisitions :
l'un desdits premier appareil (4) et deuxième appareil (5) acquiert une image respective d'une partie circonférentielle respective de la surface externe et l'autre desdits premier appareil (4) et deuxième appareil (5) acquiert une image respective d'une partie circonférentielle respective de surface interne, ou
lesdits premier (4) et deuxième (5) appareils acquièrent tous deux une image respective d'une partie circonférentielle de la surface externe,
le procédé comprenant en outre :
l'introduction dudit pneu dans un deuxième poste de contrôle (2) selon ladite direction de déplacement (X), le deuxième poste de contrôle (2) comprenant un troisième appareil (12) pour acquérir des images de la surface du pneu et un quatrième appareil (13) pour acquérir des images de la surface du pneu, chacun dudit troisième appareil (12) et dudit quatrième appareil (13) étant monté sur un élément de mouvement respectif (6), dans lequel chaque élément de mouvement (6) comprend une base fixe respective (7) et un bras mobile respectif (8) sur une extrémité libre de laquelle l'appareil respectif dudit troisième appareil (12) et dudit quatrième appareil (13) est monté,
dans lequel le deuxième poste (2) comprend une structure de support fixe respective (9) qui définit une zone d'empreinte respective du deuxième poste (2), dans lequel lesdites bases respectives (7) des éléments de mouvement (6) sont fixées à une partie supérieure de ladite structure de support respective (9),
dans lequel ladite zone d'empreinte respective a une longueur maximale respective et une largeur maximale respective, dans lequel un rapport d'aspect respectif de ladite zone d'empreinte respective est inférieur à 0,85, et
dans lequel le premier poste (1) et le deuxième poste (2) sont agencées de manière adjacente le long de la direction de déplacement (X), de telle manière qu'une sortie (11) du premier poste (1) coïncide avec une entrée du deuxième poste (2) .

2. Procédé selon la revendication 1, dans lequel ledit rapport d'aspect est supérieur ou égal à 0,5 et dans lequel la zone d'empreinte est conformée sous la forme d'un rectangle, avec des côtés plus courts parallèles à ladite direction de déplacement (X).

3. Procédé selon l'une quelconque des revendications précédentes, dans lequel une distance (D) entre lesdites bases (7) selon une dimension transversale est supérieure ou égale à 1,25 m.

4. Procédé selon l'une quelconque des revendications précédentes, dans lequel ledit au moins un premier poste de contrôle (1) comprend une bande transporteuse (21) qui supporte ledit pneu pendant que le pneu reste dans ledit au moins un premier poste et est apte pour déplacer ledit pneu le long d'une direction d'alimentation, dans lequel pendant ladite introduction du pneu dans ledit au moins un premier poste (1), ladite bande transporteuse (21) transporte ledit pneu le long de ladite direction d'alimentation parallèle à ladite direction de déplacement (X).

5. Procédé selon la revendication 4, dans lequel lors de ladite acquisition de ladite au moins une image respective par chacun dudit premier appareil (4) et dudit deuxième appareil (5), la bande transporteuse (21) pivote autour d'un axe (Y) coïncidant avec un axe de rotation du pneu.

6. Procédé selon la revendication 4 ou 5, dans lequel ladite bande transporteuse (21) a un plan rectangulaire, dans lequel une diagonale (A) dudit plan de la bande transporteuse est plus courte que ladite longueur maximale (L) de la zone d'empreinte dudit au moins un premier poste et plus longue que ou égale à 0,9 fois ladite longueur maximale (L), dans lequel un rapport d'aspect du plan de la bande transporteuse (21), défini comme un rapport d'un petit côté par rapport à un grand côté dudit plan, est supérieur ou égal à 0,7 et dans lequel ladite direction d'alimentation est parallèle à un grand côté.

7. Procédé selon l'une quelconque des revendications précédentes, dans lequel ledit au moins un premier poste (1) comprend une paire de rouleaux (22, 23) agencés à une entrée (10) et à la sortie (11), respectivement, lesdits rouleaux ayant des axes disposés transversalement.

8. Procédé selon l'une quelconque des revendications précédentes, comprenant la réalisation d'au moins trois acquisitions dans une séquence temporelle pendant que le pneu reste dans ledit au moins un premier poste (1), dans lequel à chaque acquisition, chacun desdits premier appareil (4) et deuxième appareil (5) acquiert au moins une image respective d'une partie circonférentielle respective de la surface du pneu, dans lequel ledit premier appareil (4) et ledit deuxième appareil (5) acquièrent les images respectives sensiblement de manière simultanée, dans lequel dans aucune desdites trois acquisitions, ledit premier appareil (4) et ledit deuxième appareil (5) n'acquièrent tous deux une image respective de la partie circonférentielle de la surface interne, et dans lequel, dans chacune desdites trois acquisitions, soit ledit premier appareil (4) soit ledit deuxième appareil (5) acquiert une image respective d'une partie circonférentielle respective de la surface externe et l'autre dudit premier appareil (4) ou dudit deuxième appareil (5) acquiert une image respective d'une partie circonférentielle respective de la surface interne.

9. Procédé selon la revendication 8, comprenant la réalisation d'au moins quatre acquisitions dans une séquence temporelle pendant que le pneu reste dans ledit au moins un premier poste (1), dans lequel à chaque acquisition chacun dudit premier appareil (4) et dudit le deuxième appareil (5) acquiert au moins une image respective d'une partie circonférentielle respective de la surface du pneu, dans lequel ledit premier appareil (4) et ledit deuxième appareil (5) acquièrent les images respectives sensiblement de manière simultanée, et dans lequel dans aucune desdites quatre acquisitions ledit premier appareil (4) et ledit deuxième appareil (5) acquièrent tous deux une image respective d'une partie circonférentielle de la surface interne.

10. Procédé selon l'une quelconque des revendications précédentes, dans lequel dans chacune desdites acquisitions respectives, ledit premier appareil (4) acquiert au moins une image bidimensionnelle de ladite partie circonférentielle respective de surface et également, en même temps que ladite image bidimensionnelle, au moins une image tridimensionnelle de ladite partie circonférentielle respective de surface.

11. Procédé selon l'une quelconque des revendications précédentes, dans lequel le premier poste (1), le deuxième poste (2) et un troisième poste (3) sont agencés de manière adjacente le long de la direction de déplacement (X), de telle manière qu'une sortie du deuxième poste (2) coïncide avec une entrée du troisième poste (3).

12. Procédé selon la revendication 11, dans lequel chacun dudit deuxième poste (2) et/ou troisième poste (3) présente les caractéristiques techniques revendiquées pour le premier poste (1), et dans lequel dans chacun dudit deuxième poste (2) et/ou dudit troisième poste (3), l'exécution des opérations revendiquées pour le premier poste (1) est comprise.

13. Procédé selon l'une quelconque des revendications précédentes, dans lequel, dans ledit premier poste (1), ledit premier appareil (4) acquiert des images bidimensionnelles et tridimensionnelles de parties circonférentielles de surface externe d'une première partie d'un flanc, de surface externe d'un épaulement, de surface interne d'une première partie, et d'une deuxième partie d'un sommet dudit pneu, respectivement, et dans lequel ledit deuxième appareil (5) acquiert une image tridimensionnelle d'une partie circonférentielle d'un sommet dudit pneu, et des images bidimensionnelles, utilisant un éclairage rasant, d'une partie circonférentielle de surface externe d'un bourrelet, d'une première partie et d'une deuxième partie de la bande de roulement dudit pneu, respectivement.

14. Procédé selon l'une quelconque des revendications précédentes, dans lequel dans ledit deuxième poste (2), ledit troisième appareil (12) acquiert des images bidimensionnelles et tridimensionnelles de parties circonférentielles de surface externe d'un bourrelet, d'une deuxième partie d'un flanc, d'une première partie et d'une deuxième partie d'un sommet dudit pneu, respectivement, et ledit quatrième appareil (13) acquiert des images tridimensionnelles de parties circonférentielles de surface interne d'un bourrelet, d'une première partie et d'une deuxième partie d'un flanc et d'un épaulement dudit pneu, respectivement.

15. Procédé selon l'une quelconque des revendications 11 à 12, dans lequel dans ledit troisième poste (3), un cinquième appareil (14) d'acquisition d'images de la surface du pneu acquiert des images bidimensionnelles de parties circonférentielles de surface externe d'un bourrelet, d'un flanc et d'un épaulement dudit pneu, respectivement, et un sixième appareil (15) pour acquérir des images de la surface du pneu acquiert des images bidimensionnelles de parties circonférentielles de la surface interne d'un épaulement, d'un bourrelet, d'une première partie et d'une deuxième partie d'un flanc dudit pneu, respectivement.
